# EUROPEAN PATENT APPLICATION

(11) **EP 0 553 785 A1**
(43) Date of publication of application: **04.08.1993**
(21) Application number: 93101201.7
(22) Date of filing: 27.01.1993
(51) Int. Cl.: G03C 3/00

(54) **Small-sized photographic rollfilm cartridge and film camera therefor**

(30) Priority: 31.01.1992 JP 16934/92
(71) Applicant: KONICA CORPORATION, Tokyo 163 (JP)
(72) Inventor: Yagi, Toshihiko, c/o KONICA CORPORATION, Hino-shi, Tokyo (JP); Kato, Kazuo, c/o KONICA CORPORATION, Hino-shi, Tokyo (JP); Ikariya, Toshiyuki,c/o KONICA CORPORATION, Hino-shi, Tokyo (JP); Todo, Kazuo,c/o KONICA CORPORATION, Hino-shi, Tokyo (JP)
(74) Representative: Henkel, Feiler, Hänzel & Partner

(57) **Abstract**

A photographic film cartridge comrises a film including a film base and a emulsion layer provided on the film base, wherein the thickness of the film base is 101 to 115 µm and the total thickness of the film base and the emulsion layer is 125 to 142 µm; a spool shaft around which the film is wound, wherein the diameter of the spool shaft is not less than 8 mm; and a cartridge chamber in which the film wound around the spool shaft is accommodated, wherein the diameter of a circle inscribed to the inside of the cartridge chamber is not larger than 22 mm.

## Description

### FIELD OF THE INVENTION

This invention relates to a small-sized photographic film cartridge and a camera excellent in portability and, particularly, to a photographic film cartridge improved in handling in development process as it is small-sized and to a camera with a built-in photographic film cartridge as mentioned above.

### BACKGROUND OF THE INVENTION

Among the negative films for amateur use, rollfilms loaded in 35mm size cartridges have currently occupied most of the market share. However, the 35mm size cartridge system has had such a defect that a film can not easily be loaded in a camera and the film size is so large that the desirable camera design is restricted. Therefore, various improvement techniques have been proposed.

Japanese Patent Publication Open to Public Inspection (hereinafter referred to as JP OPI Publication) No. 2-181749/1990 discloses a small-sized film cartridge having a film-base thickness of not thicker than 100µm.

When a film is stored for a long time in a small-sized film cartridge, the film has a problem of hardly handling it in a development process, because it has a roll-set curl. It is, therefore, required to use a film-base improved in mechanical strength and having the characteristics of eliminating the above-mentioned roll-set curl in a development process, which are the characteristics of a cellulose triacetate film-base. For achieving the above-mentioned object, various types of film-bases have been proposed.

An example of the above-mentioned proposals may be cited in JP OPI Publication No. 1-244446/1989.

However, the roll-set curl of the film-bases claimed in the above-mentioned patent cannot satisfactorily be eliminated and, particularly, the present inventors have discovered that this problem has raised apparently in the case where a film cartridge is small-sized and the film take-up spool of the film cartridge is made thin.

As described in JP OPI Publication No. 3-41435/1991, on the other hand, it has been known that the perforations are broken when a film-base is so thinned as to make a film cartridge small in size. This particular patent has tried to solve the above-mentioned problem by providing a gelatin-containing backing layer to a film. However, the present inventors have discovered therein that the gelatin-containing backing layer is stained in a development process so as to produce a seriously defective trouble on the resulting photographic images.

As described above, there has not yet found out any film cartridge not having any one of roll-set curl, perforation breakage and film-staining produced in a development process, when the film-base is so thinned as to make the film cartridge size small.

### SUMMARY OF THE INVENTION

To counter the above-described problems, it is an object of the invention to provide a photographic film cartridge improved in handling in development process and excellent in roll-set curl elimination, as it is small-sized, and to a camera with a built-in photographic film cartridge.

The above-mentioned object of the invention can be achieved with a photographic rollfilm cartridge comprising a film take-up spool, a film take-up chamber and a photographic film wound round the film take-up spool and stored in the film take-up chamber, the photographic roll film cartridge characterized in that the inscribed circle of the projective inner wall drawing of the film take-up chamber has a diameter of not larger than 22mm from the direction of the film take-up spool rotating shaft, that the film take-up spool has an effective diameter of not smaller than 8mm, that the total thickness of the film-base and the emulsion layers is within the range of 125µm to 142µm and that the film-base thickness is within the range of 101µm to 115µm; or the objects of the invention can be achieved with the photographic film camera characterized in that the ratio of the effective diameter of the take-up spool to the diameter of the inscribed circle of the above-mentioned inner wall projective drawing is within the range of 1.3 to 2.1, that both of the above-mentioned film cartridge and a photographing function are provided and that the designing is so made as to store the photographic film in the film take-up chamber as the picture-taking is made.

### BRIEF DESCRIPTION OF THE DRAWINGS

Fig. 1 is a perspective illustration on how a film is taken up;
Fig. 2 is a cross-sectional view of a cartridge barrel; and
Fig. 3 is a cross-sectional view of a cartridge; wherein
   P is a cartridge;
   S is a pull-out spool;
   T is a velvet (or a teremp);
   1, 2 are each hubs;
   3 is a take-up spool;
   4 is a flange;
   5 is a cap; and
   6 is a barrel.

### DETAILED DESCRIPTION OF THE INVENTION

The cartridges and photographic cameras each of the invention can effectively be used as a handy camera which is generally called a film unit with a built-in lens.

In this kind of cameras, a film is wound in advance around the side of 'the take-up spool' which is so called in the cases of ordinary types of cameras and is then used in a system of rewinding the film into a cartridge as pictures are taken one after another.

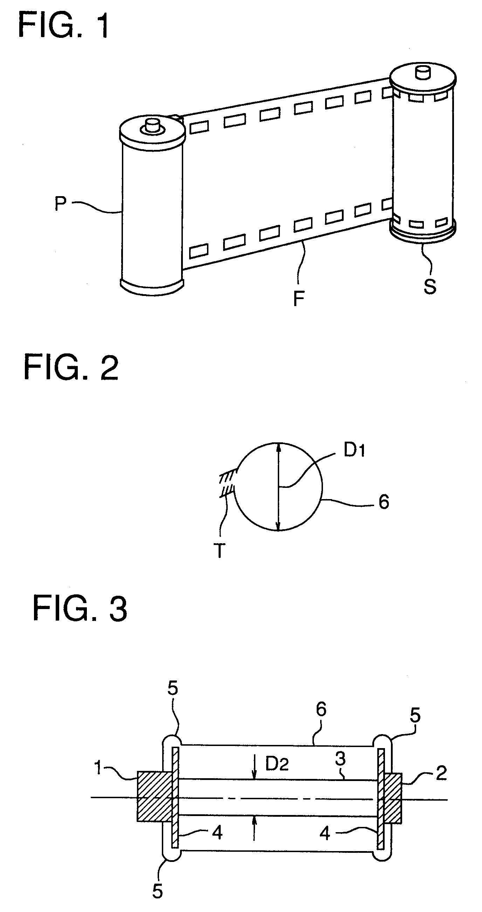

Fig. 1 is a perspective view for illustration of the case of taking-up a film as described above, wherein F is a film which is wound around unwinding shaft S in advance of making use of the camera.

Fig. 1 shows a system in which film frames are wound up one after another into cartridge P as pictures are taken.

Fig. 2 is a cross-sectional view of cartridge barrel 6 comprising a film gateway which is provided with velvet (or teremp) T so as to prevent a film from damages.

In the invention and when a circle inscribed in the projective drawing of the inner wall of the above-mentioned film cartridge chamber has a diameter of D₁, D₁ is not larger than 22mm, desirably, within the range of 15mm to 21mm and, more desirably, within the range of 17mm to 20mm.

Fig. 3 is a cross-sectional view of a cartridge of the invention, wherein 1 is a longer hub, 2 is a shorter hub, 4 is a flange, 5 is a cap, 3 is a take-up spool and 6 is a barrel. When the shaft diameter of 3 is D₂, the effective diameter of D₂ is not smaller than 8mm and, more desirably, within the range of 9mm to 12mm.

Further in the invention, D₁/D₂ is desirably to be within the range of 1.3 to 2.1.

The term, 'an effective diameter', herein stated is defined as the most biggest portion wound a film around than any other film wound up portions. The total thickness of a film-base and emulsion layers is within the range of 125µm to 142µm and, desirably, 130µm to 140µm.

The film-base thickness is within the range of 101µm to 115µm and, desirably, 105µm to 112µm. The local scattering allowance of the film-base thickness is to be, desirably, not larger than 5µm, more desirably, not larger than 4µm and, further desirably, not larger than 3µm.

### EXAMPLES

Now, the advantages of the invention will be exemplified with reference to the following examples.

### Example 1

A multilayered color light sensitive material sample 101 was prepared by multicoating each of the layers having the following compositions on a cellulose triacetate film sublayered on one side thereof and having an average thickness of 110µm. The total thickness of the film-base and the emulsion layers was 138µm.

The resulting sample was slit into the same width as that of the ordinary 35mm standard and was then perforated on the both sides thereof. The resulting sample film was cut into a length for making 24-frame exposures and was then loaded in the small-sized cartridge shown in Fig.1.

The diameter of the circle inscribed in the projective drawing of the film take-up chamber inner wall was 19.0mm and the effective diameter of the film take-up spool was 10.0mm. The film cartridge in this case is named sample 1001.

Film cartridge samples 1002 through 1006 were each prepared in the same manner as in sample 1001, except that the diameters of the film take-up chambers thereof and the diameters of the film take-up spools thereof were each varied. When a 8µm-thick gelatin backing layer was provided to film sample 1004, the resulting sample is named 1101.

The above-mentioned resulting samples will be indicated in Table 1.

**Table 1**

| Film cartridge No. | Film-base thickness (µm) | Total thickness of film-base & emulsion layer (µm) | Diameter of film take-up chamber (mm) | Diameter of film take-up spool (mm) | |
|---|---|---|---|---|---|
| 1001 | 110 | 138 | 19.0 | 10.0 | Invention |
| 1002 | 110 | 138 | 19.0 | 8.5 | Invention |
| 1003 | 110 | 138 | 19.0 | 6.0 | Comparison |
| 1004 | 95 | 123 | 19.0 | 10.0 | Comparison |
| 1005 | 108 | 136 | 17.0 | 9.0 | Invention |
| 1006 | 108 | 136 | 17.0 | 7.0 | Comparison |
| 1101 | 95 | 123 | 19.0 | 10.0 | w/backing layer (for comparison) |

After treating the roll-set curl in the following manner, each of the film cartridge samples was taken out and was then loaded in the film cameras of the invention. Each of the films was taken out of the film cartridges in a darkroom. Each of the films was roll-shaped in the pulling-out portion thereof and was then loaded in the camera, respectively.

Next, pictures were taken by the cameras until the films were wound up into the cartridges. The film cartridges were taken out and the following development process was carried out by an automatic processor, Model NCV-36 manufactured by Noritsu Koki Co., Ltd.

| Processing step | Processing time | Processing temperature | Amount replenished |
|---|---|---|---|
| Color developing | 3min.15sec | 38°C | 780 ml |
| Bleaching | 45sec | 38°C | 150 ml |
| Fixing | 1min.30sec | 38°C | 830 ml |
| Stabilizing | 60sec | 38°C | 830 ml |
| Drying | 1min. | 40∼70°C | - |
| (The amounts replenished were indicated by a value per sq.meter of the light sensitive materials processed.) | | | |

| Color developer | |
|---|---|
| Water | 800 ml |
| Potassium carbonate | 30 g |
| Sodium hydrogen carbonate | 2.5 g |
| Potassium sulfite | 3.0 g |
| Potassium bromide | 1.3 g |
| Potassium iodide | 1.2 mg |
| Hydroxylamine sulfate | 2.5 mg |
| Sodium chloride | 0.6 g |
| 4-amino-3-methyl-N-ethyl-N-(β-hydroxylethyl) aniline sulfate | 4.5 g |
| Diethylene triamine pentaacetic acid | 3.0 g |
| Potassium hydroxide | 1.2 g |
| Add water to make | 1 liter |
| Adjust pH with potassium hydroxide or a 20% sulfuric acid solution to be | pH10.06 |

| Color developer replenisher | |
|---|---|
| Water | 800 ml |
| Potassium carbonate | 35 g |
| Potassium sulfite | 5 g |
| Potassium bromide | 0.4 g |
| Hydroxylamine sulfate | 3.1 mg |
| 4-amino-3-methyl-N-ethyl-N-(β-hydroxylethyl) aniline sulfate | 6.3 g |
| Diethylene triamine pentaacetic acid | 3.0 g |
| Potassium hydroxide | 2 g |
| Add water to make | 1 liter |
| Adjust pH with potassium hydroxide or a 20% sulfuric acid solution to be | pH10.18 |

| Bleacher | |
|---|---|
| Water | 700 ml |
| Ferric ammonium 1,3-diaminopropane tetraacetate | 175 g |
| Disodium ethylenediaminetetraacetate | 2 g |
| Ammonium bromide | 200 g |
| Glacial acetic acid | 40 ml |
| Sodium nitrate | 40 g |
| Add water to make | 1 liter |
| Adjust pH with aqueous ammonia or glacial acetic acid to be | pH4.4 |

| Bleacher replenisher | |
|---|---|
| Water | 700 ml |
| Ferric ammonium 1,3-diaminopropane tetraacetate | 175 g |
| Disodium ethylenediaminetetraacetate | 2 g |
| Ammonium bromide | 200 g |
| Sodium nitrate | 50 g |
| Glacial acetic acid | 56 ml |
| Add water to make | 1 liter |
| Adjust pH with aqueous ammonia or glacial acetic acid to be | pH4.0 |
| Suitably adjust the pH so that the pH of the bleacher tank solution may be maintained. | |

As same as the fixer and the fixer replenisher,

| | |
|---|---|
| Water | 800 ml |
| Ammonium thiosulfate | 150 g |
| Ammonium thiocyanosulfate | 120 g |
| Sodium sulfite | 15 g |
| Disodium ethylenediaminetetraacetate | 2.0 g |
| Adjust pH with glacial acetic acid and aqueous ammonia to be | pH6.2 |
| (Add water to make | 1000 ml |

| Fixer replenisher | |
|---|---|
| Water | 800 ml |
| Ammonium thiocyanate | 150 g |
| Ammonium thiosulfate | 180 g |
| Sodium sulfite | 20 g |
| Disodium ethylenediaminetetraacetate | 5 g |
| Adjust pH with aqueous ammonia or glacial acetic acid to be | pH6.5 |
| Add water to make | 1 liter |

| Stabilizer & stabilizer replenisher | |
|---|---|
| Water | 900 ml |
| 1,2-benzisothiazoline-3-one | 0.1 g |
| A 10 mol ethylene oxide adduct of p-octyl phenol | 2.0 ml |
| Hexamethylene tetramine | 0.2 g |
| Dimethylol urea | 0.5 g |
| Aqueous ammonia | 0.5 ml |
| Siloxane (L-77 manufactured by UCC) | 0.1 g |

### Evaluation of roll-set curl elimination

A film cartridge stored a 24 exposure film therein was processed for 4 hours at 55°C and 50%RH and the film was taken out. One end of the film was fixed and the curl (with a curvature radius of 1/m) in the width direction of the film in the hanging state was measured. Based upon the values obtained, the evaluation was made in the following manner.

ⓞ: Less than 30; ⃝: Within the range of not less than 30 to less than 40; X: Within the range of not less than 40 to less than 50; XX: Not less than 50.

The smaller the values are, the more the roll-set curl elimination is excellent.

The results thereof will be shown in Table 2.

**Table 2**

| Sample No. | Roll-set curl elimination | Perforation breakage | Film stain in process | |
|---|---|---|---|---|
| 1001 | ⓞ | Not produced | Not produced | Invention |
| 1002 | ⃝ | -ditto- | -ditto- | Invention |
| 1003 | XX | -ditto- | -ditto- | Comparison |
| 1004 | ⓞ | Produced | -ditto- | Comparison |
| 1005 | ⃝ | Not produced | -ditto- | Invention |
| 1006 | X | -ditto- | -ditto- | Comparison |
| 1101 | ⓞ | -ditto- | Produced | Comparison (w/backing layer) |

When making use of the cartridges of the invention, it was proved from the results shown in Table 2 that the roll-set curl elimination can be excellent and the perforation breakage cannot be produced.

According to the invention, both of a photographic film cartridge improved in handling in any development process and excellent in roll-set curl elimination as it is small in size and a camera having a built-in photographic film cartridge can be provided.

## Claims

1. A photographic film cartridge, comprising:
a film including a film base and a emulsion layer provided on the film base, wherein the thickness of the film base is 101 to 115 µm and the total thickness of the film base and the emulsion layer is 125 to 142 µm;
a spool shaft around which the film is wound, wherein the diameter of the spool shaft is not less than 8 mm; and
a cartridge chamber in which the film wound around the spool shaft is accommodated, wherein the diameter of a circle inscribed to the inside of the cartridge chamber is not larger than 22 mm.

2. The cartridge of claim 1, wherein the ratio of the diameter of the spool shaft to the diameter of the inscribed circle is 1.3 to 2.1 .

3. A single use camera in which a photographic film is loaded and which is sold together with the loaded film, comprising:
means for photographing an image on the film;
the film including a film base and a emulsion layer provided on the film base, wherein the thickness of the film base is 101 to 115 µm and the total thickness of the film base and the emulsion layer is 125 to 142 µm;
a supply spool shaft from which the film is supplied to the photographing means;
a take-up spool shaft around which the photographed film is wound, wherein the diameter of the take-up spool shaft is not less than 8 mm; and
a cartridge chamber in which the take-up spool shaft is disposed so that the photographed film is accommodated in the cartridge chamber, wherein the diameter of a circle inscribed to the inside of the cartridge chamber is not larger than 22 mm.
